(19) Europäisches Patentamt
European Patent Office
Office européen des brevets

(11) Veröffentlichungsnummer: **0 091 002**
**A2**

(12) # EUROPÄISCHE PATENTANMELDUNG

(21) Anmeldenummer: **83102839.4**

(22) Anmeldetag: **22.03.83**

(51) Int. Cl.³: **C 08 F 291/00**
//C08F255/00, (C08F291/00, 218/16)

(30) Priorität: **03.04.82 DE 3212538**

(43) Veröffentlichungstag der Anmeldung:
**12.10.83 Patentblatt 83/41**

(84) Benannte Vertragsstaaten:
**DE FR GB IT**

(71) Anmelder: BAYER AG
**Zentralbereich Patente, Marken und Lizenzen**
**D-5090 Leverkusen 1, Bayerwerk(DE)**

(72) Erfinder: **Bartl, Herbert, Dr.**
**Eichendorffweg 10**
**D-5068 Odenthal(DE)**

(72) Erfinder: **Rudolph, Hans, Dr.**
**Haydnstrasse 9**
**D-4150 Krefeld(DE)**

(72) Erfinder: **Thörmer, Joachim, Dr.**
**Emil-Nolde-Strasse 39**
**D-5090 Leverkusen(DE)**

(54) **Vernetzung von Ethylenpolymeren.**

(57) Verfahren zur Peroxidvernetzung unter Verwendung von Trialkylcitraten als Aktivatoren und Koagenzien.

**EP 0 091 002 A2**

BAYER AKTIENGESELLSCHAFT 5090 Leverkusen, Bayerwerk

Zentralbereich
Patente, Marken und Lizenzen Eck/by-c

## Vernetzung von Ethylenpolymeren

Es ist bekannt zur Verbesserung des Vernetzungsgrades von Ethylen-Polymeren Triallylcyanurat einzusetzen, sowie eine größere Zahl weiterer mehrfach ungesättigter Verbindungen, die sich jedoch aus verschiedenen Gründen nicht so gut wie Triallylcyanurat bewährt haben. Triallylcyanurat enthält jedoch Stickstoff, so daß beispielsweise bei Schwelbränden es möglich sein kann, daß Stickoxyde entstehen. Es ist deshalb erwünscht, daß beispielsweise in der Klasse der hochwitterungs- und wärmebeständigen Elastomeren, wie sie z.B. als Kabelumhüllungen verwendet werden, bei evtl. vorkommenden Bränden keine Stickoxyde entstehen. Als geeignete Polymere haben sich hierfür Ethylenvinylacetat-Copolymere bewährt, insbesondere solche, die von ihrem Charakter her Elastomer-Eigenschaften besitzen, d.h. mit einem Vinylacetatgehalt zwischen 35 und 50 % Vinylacetat.

Es wurde nun gefunden, daß Triallyl-citrate als Koagenzien und Aktivatoren für Peroxydvernetzungen wirksam sind. Diese Verbindungen enthalten keinen Stickstoff.

Daher stellt der Ersatz des Triallylcyanurats durch Triallylcitrate einen Fortschritt dar.

Darüber hinaus zeigt sich beispielsweise, daß durch den Zusatz von Triallylcitraten die Mischungsviskosität der Mischungen sehr deutlich erniedrigt wird, ein Vorteil im Hinblick auf bessere Verarbeitbarkeit bei höheren Füllgraden.

Erfindungsgemäß können Triallylcitrate der Formel (I)

$$\begin{array}{l} \phantom{RO-}COOCH_2-CH=CH_2 \\ RO-COOCH_2-CH=CH_2 \\ \phantom{RO-}COOCH_2-CH=CH_2 \end{array} \qquad (I),$$

in welcher

R für Wasserstoff, einen gesättigten oder ungesättigten aliphatischen Rest, gegebenenfalls substituierten aromatischen Rest, gegebenenfalls substituierten aromatisch-aliphatischen Rest oder einen Acylrest der Formel (Ia)

$$R^1-\underset{\overset{\|}{O}}{C}- \qquad (Ia)$$

in welcher

$R^1$ für einen gesättigten oder ungesättigten aliphatischen Rest oder einen aromatischen Rest

steht, verwendet werden.

Es zeigte sich, daß mit Hilfe der Triallylcitrate nicht nur die Vernetzung von Ethylen-Vinylacetat-Copolymeren, sondern auch anderer Ethylenpolymerisate, wie Polyethylen, Ethylen-Propylen-Copolymeren, chloriertes Polyethylen und anderer Ethylen-Polymeren bzw. Copolymeren verbessert werden kann.

Vorzugsweise werden Triallylcitrate der Formel (I) eingesetzt, in welcher

R für Wasserstoff, einen gesättigten oder ungesättigten aliphatischen Rest mit 1 bis 18 C-atomen, einen gegebenenfalls mit Halogen, mit Alkylgruppen mit 1 bis 4 C-Atomen substituierten aromatischen Rest mit 6 bis 10 C-Atomen, einen gegebenenfalls substituierten aliphatischen Rest mit 7 bis 11 C-Atomen oder einen Acylrest der Formel (Ia), in welcher

$R^1$ für einen gesättigten oder ungesättigten aliphatischen Rest mit 1 bis 18 C-Atomen oder einen aromatischen Rest mit 6 bis 10 C-Atomen,

steht.

Besonders bevorzugt werden Triallylcitrate der Formel (I) eingesetzt, in welcher

R für Wasserstoff, einen gesättigten oder ungesättigten aliphatischen Rest mit 1 bis 4 C-Atomen,

einen gegebenenfalls mit Chlor, Brom und Methylgruppen substituierten Phenylrest und Benzylrest oder einen Acylrest der Formel (Ia), in welcher

$R^1$ für einen gesättigten oder ungesättigten aliphatischen Rest mit 1 bis 4 C-Atomen oder einen Phenylrest,

steht.

Ganz besonders bevorzugt sind Triallylacetylcitrat und Triallylcitrat.

Da als Basis der Triallylcitrate Zitronensäure verwendet wird, bieten sich die Triallylcitrate besonders für die Herstellung von Elastomer-Artikeln für den Lebensmittel- oder medizinischen Sektor an.

Die Zitronensäure-Triallylester könnten nach bekannten Verfahren hergestellt werden. Zur Vulkanisation werden sie den Elastomeren in einer Menge von 0,1 bis 8, bevorzugt 0,5 bis 5, besonders bevorzugt 1 bis 4 Gew.-Teilen, zusammen mit radikalbildenden Agenzien, die üblicherweise für die Vernetzung von gesättigten Polymeren verwendet werden, zugesetzt.

Als radikalbildende Agenzien können beispielsweise Persulfate, Perborate, Peroxyde, wie Benzoylperoxyd, Perpivalat, tert. Butyl-hydroperoxyd, Peroxydicarbonate wie Dicyclohexylperoxydicarbonat, Di-tert.-butylperoxyd, Cyclohexanperoxyd, Dicumylperoxyd und weiterhin energiereicher Strahlen, wie stark beschleunigte Elektronenstrahlen verwendet werden.

Die zu vulkanisierenden Polymerisate können beispielsweise mit den üblichen verstärkenden und nicht verstärkenden Füllstoffen gefüllt werden und beispielsweise mit Alterungsschutzmitteln sowie Lichtschutzmitteln versetzt werden.

Beispiel 1 (Vergleichsbeispiel)

Auf einem Laborwalzwerk oder einem Laborkneter werden 100 Teile eines Ethylen-Vinylacetat-Copolymeren [1)] (EVAC) mit einem Gehalt von 45 % Vinylacetat mit 45 Teilen FEF Ruß, 1 Teil Stearinsäure, 1 Teil styrolisiertem p-Phenylendiamins [2)], 3 Teilen eines Polycarbodiimids [3)] und 4,5 Teilen eines Aralkylperoxids innig vermischt. Die erhaltene Kautschuk-Mischung wird in einer Presse bei 170°C vernetzt. Die erhaltenen 4 mm Ringe ergeben die in Tabelle 1 unter Beispiel 1 genannten mechanischen Werte. Dabei wurde nach DIN 53 504 geprüft. Der Druckverformungsrest wurde nach DIN 53 517, Probenform B, bestimmt.

1) verwendet wurde Levapren 450 [R] der Bayer AG
2) verwendet wurde Vulkanox DDA [R] der Bayer AG
3) verwendet wurde Stabaxol P der Bayer AG
4) verwendet wurde Perkadox 14/40 [R] der AKZO

Beispiel 2

Es wird die gleiche Mischung, - wie unter Beispiel 1 beschrieben, - hergestellt. Zusätzlich werden jedoch 3 Teile Triallylcitrat in die Mischung eingearbeitet. Bei der Messung der Mooneyviskosität stellt man einen niedrigeren Wert fest, wobei die Vulkanisat-Werte, an 4 mm-Ringen gemessen (siehe Beispiel 1), wesentlich besser sind und einen guten Vernetzungsgrad anzeigen. Auch der Druckverformungsrest ist um fast 50 % durch den Zusatz von Triallylcitrat verbessert. Die Weste

sind in Tab. 1 angegeben.

Beispiel 3 (Vergleichsbeispiel)

Wie in Beispiel 1 beschrieben wird eine Kautschukmischung hergestellt, jedoch wird das Elastomer EPDM [1] mit 100 Teilen eingesetzt. Als weitere Ingredentien werden zugefügt: 1 Teil Stearinsäure, 1 Teil styrolisiertes Diphenylamin [2], 60 Teile FEF-Ruß und 4 Teile Aralkylperoxid [4]. Die Vulkanisation wurde wie in Beispiel 1 angegeben durchgeführt. Die erhaltenen Meßwerte sind in Tabelle 1 aufgeführt.

Beispiel 4

Es wird nach Beispiel 3 gearbeitet. Der Kautschukmischung werden jedoch zusätzlich 2 Teile Triallylcitrat zugesetzt. Die Meßdaten sind in Tabelle 1 niedergelegt. Es zeigt sich, daß auch hier durch Triallylcitrat die Mooneyviskosität abgesenkt und die mechanischen Werte wesentlich verbessert werden, so daß ein guter Vernetzungsgrad erzielt wird (Vulkanisation siehe Beispiel 1). Der Druckverformungsrest wird um 15-20 % verbessert.

Beispiel 5 (Vergleichsbeispiel)

Es wird eine Kautschukmischung mit 100 Teilen EPM [1], 1 Teil Stearinsäure, 1 Teil styrolisiertem Diphenylamin [2], 60 Teilen FEF-Ruß und 4 Teilen Aralkylperoxid [4] auf einer Laborwalze hergestellt. Die Weiterverarbeitung erfolgte wie in Beispiel 1 angegeben. Die Meßdaten sind in Tabelle 1 niedergelegt.

Beispiel 6

Die Kautschukmischung wurde, wie in Beispiel 5 angegeben, auf einer Laborwalze hergestellt. Zusätzlich wurden in die Mischung 3 Teile Triallylcitrat eingearbeitet. Durch das Triallylcitrat wird die Mooneyviskosität der Mischung wiederum abgesenkt, während die mechanischen Werte nach Press-Vulkanisation bei 170°C einen guten Vulkanisationsgrad anzeigen. Der Druckverformungsrest ist fast nun 50 % verbessert worden gegenüber der Vulkanisation aus Beispiel 5. Die Meßwerte sind in Tab. 1 enthalten.

Beispiel 7 (Vergleichsbeispiel)

Es wird eine Kautschukmischung aus 100 Teilen chloriertem Polyethylen [5] (CPE), 0,75 Teilen styrolisiertem Diphenylamin [2], 10 Teilen Magnesiumoxid, 25 Teile Dioctylphthalat, 70 Teile Ruß SRF-LM und 5 Teilen eines Aralkylperoxids [4] auf einer Laborwalze hergestellt. Es wird wie nach Beispiel 1 vulkanisiert. Die erhaltenen Meßdaten sind in Tabelle 2 zusammengestellt.

Beispiel 8

Es wird wie nach Beispiel 7 gearbeitet. Zusätzlich werden der Mischung 4,5 Teile Triallylcitrat zugesetzt. Vernetzt wird nach Beispiel 1. Die Meßdaten sind in

Tabelle 2 zusammengestellt.

5) verwendet wurde Bayer CM 3630® der Bayer AG

Beispiel 9 (Vergleichsbeispiel)

Es wurde wie in Beispiel 1 mit dem gleichen Polymer (100 Teile) eine Mischung mit Brandschutzverhalten hergestellt. Als Füllstoff wurden 120 Teile eines Aluminiumoxihydrates verwendet. Zusätzlich wurden 1,5 Teile Vinylsilan, 1 Teil Stearinsäure, 1 Teil styrolisiertes Diphenylamin und 5 Teile eines Aralkylperoxids eingearbeitet. Die Mischung wurde wie nach Beispiel 1 vulkanisiert. Die Meßdaten sind in Tabelle 2 zusammengestellt.

Beispiel 10

Es wird wie nach Beispiel 9 gearbeitet, jedoch werden zusätzlich noch 4 Teile Triallylcitrat eingearbeitet. Die Mischungseigenschaften und Vulkanisatwerte sind in Tabelle 2 enthalten.

Beispiel 11 (Vergleichsbeispiel)

Es werden auf einer Laborwalze 100 Teile eines Terpolymeren (hergestellt nach DE-OS 2 843 041), 1 Teil Stearinsäure, 1 Teil PE-Wachs, 3 Teile Polycarbodiimid, 1 Teil eines styrolisierten Diphenylamins [2)], 25 Teile FEF-Ruß, 45 Teile HAF-Ruß und 4,5 Teile eines Aralkylperoxids [4)] innig vermischt und nach Beispiel 1 vulkanisiert. Die Mooney-Viskosität und die mechanischen Werte sind in Tabelle 3 angegeben.

Beispiel 12

Es wird wie nach Beispiel 11 gearbeitet, jedoch werden der Mischung 3,5 Teile Triallylcitrat zugesetzt. Man erhält eine Mischung, deren Mooney-Viskosität erniedrigt und deren mechanische Werte nach Vulkanisation (vgl. Beispiel 1) gegenüber dem Versuch ohne Triallylcitrat erheblich verbessert sind.

Beispiel 13 (Vergleichsbeispiel)

Man stellt auf einer Laborwalze eine Mischung aus 100 Teilen eines hydrierten Nitrilkautschuks, wie in DE-OS 25 39 132 beschrieben, her. Die zusätzlichen Mischungsbestandteile sind: 1 Teil Stearinsäure, 10 Teile Magnesiumoxid, 1,5 Teile eines styrolisierten Diphenylamins [2)], 1,5 Teile des Zinksalzes von 2-Mercaptobenzimidazol [6)], 25 Teile FEF-Ruß, 50 Teile MT-Ruß und 4,5 Teile eines Aralkylperoxids [4)]. Vulkanisiert wurde nach Beispiel 1. Die Meßdaten der Mischung und des Vulkanisates sind in Tabelle 3 festgehalten.

6) verwendet wurde Vulkanox ZMB-2® der Bayer AG

Beispiel 14

Es wurde wie nach Beispiel 13 gearbeitet. Die Mischung enthielt jedoch zusätzlich 3,5 Teile Triallylcitrat.

Es wurde eine günstigere Mischungsviskosität und ein erheblich besserer Vernetzungsgrad als ohne Triallylcitrat nach der Vulkanisation analog Beispiel 1 erhalten. Die Daten sind in Tabelle 3 niedergelegt.

Beispiel 15

Es wurde wie nach Beispiel 2 gearbeitet, jedoch anstelle von 3 Teilen Triallylcitrat wurden 3 Teile Acetyl-triallylcitrat verwendet. Ergebnis der Vulkanisatprüfungen siehe Tabelle 4.

Beispiel 16

Es wurde wie nach Beispiel 6 gearbeitet, jedoch wurden anstelle von 3 Teilen Triallylcitrat 3 Teile Acetyltriallylcitrat eingesetzt.
Das Ergebnis der Vulkanisatprüfungen ist in Tabelle 4 festgehalten.

Beispiel 17 (Vergleichsbeispiel)

Auf einer 110°C heißen Laborwalze wurden 100 Teile Polyethylen (verwendet wurde BAYLON 19 N 430 ® der Fa. Bayer) mit 1 Teil Stearinsäure, 0,5 Teilen Vulkanox DDA ® und 4,5 Teilen Peroxid (Perkadox 14/40 ® der Fa. AKZO) vermischt.

4-mm-Klappen wurden bei 170°C 22' vulkanisiert und daraus DIN-Ringpulver ausgestanzt. Die Quellung bei 50°C in

Toluol wurde an den inneren Ringen gemessen, die Werte in Tabelle 4 zusammengestellt.

Beispiel 18

Es wurde wie nach Beispiel 17 gearbeitet, jedoch zusätzlich wurden 3 Teile Triallylcitrat zugemischt. Die Quellergebnisse der Vulkanisate sind in Tabelle 4 enthalten.

Tabelle 1

| Beispiele | 1 | 2 | 3 | 4 | 5 | 6 |
|---|---|---|---|---|---|---|
| Mooney-Viskosität ML 4/100°C | 36 | 31 | 110 | 98 | 80 | 71 |
| Zugfestigkeit (mP.a) | 10,6 | 12,9 | 17,1 | 16,9 | 11 | 14 |
| Bruchdehnung (%) | 435 | 250 | 300 | 240 | 510 | 345 |
| M 100 % (mP.a) | 3,3 | 4,6 | 4,1 | 5 | 1,6 | 2,5 |
| M 200 % (mP.a) | 6,9 | 11,7 | 11,2 | 15,2 | 3,5 | 7,7 |
| Härte (bei 23°C) Shore A | 67 | 70 | 73 | 74 | 59 | 64 |
| Rückprallelastizität (%) | 35 | 34 | 47 | 51 | 47 | 49 |
| Druckverformungsrest nach DIN 53 517 Probeform B 70 h/125°C (%) | 27 | 14 | 16 | 13 | 35 | 20 |

Ergebnis aus Tabelle 1

Durch die Verwendung von Triallylcitrat als Coagenz für die Vernetzung werden neben einer Erniedrigung der Mooney-Viskosität die Vulkanisatwerte erheblich verbessert (Spannungswerte, Druckverformungsrest).

Tabelle 2

| Beispiele | 7 | 8 | 9 | 10 |
|---|---|---|---|---|
| Mooney-Viskosität ML 4/100°C | 75 | 70 | 32 | 27 |
| Zugfestigkeit (MPa) | 13,5 | 14,8 | 9,7 | 11,5 |
| Bruchdehnung (%) | 680 | 405 | 200 | 140 |
| M 100 % (MPa) | 2,6 | 3,7 | 6,2 | 9,1 |
| M 200 % (MPa) | 6,4 | 9,1 | - | - |
| Härte (bei 23°C) Shore A | 68 | 71 | 73 | 77 |
| Rückprallelastizität (%) | 22 | 25 | 32 | 34 |
| Druckverformungsrest nach DIN 53 517 Probeform B 70 h/120°C (%) | 40,0 | 32,7 | nicht gemessen | nicht gemessen |

Ergebnis aus Tabelle 2

In jeder Mischung wird die Mooney-Viskosität durch Zusatz von Triallylcitrat abgesenkt und der Vernetzungsgrad beträchtlich erhöht. Man erhält höhere Spannungswerte, höhere Härten und einen erheblich verbesserten Druckverformungsrest. Im Beispiel 10 wird die Zugfestigkeit um fast 20 % verbessert.

Tabelle 3

| Beispiele | 11 | 12 | 13 | 14 |
|---|---|---|---|---|
| Mooney-Viskosität ML 4/100°C | 51 | 45 | 130 | 117 |
| Zugfestigkeit (MPa) | 8,5 | 10,5 | 15,7 | 16,5 |
| Bruchdehnung (%) | 340 | 280 | 440 | 350 |
| M 100 % (MPa) | 2,2 | 3,0 | 4,2 | 5,1 |
| M 200 % (MPa) | 5,4 | 8,4 | 10,6 | 12,2 |
| Härte (bei 23°C) Shore A | 59 | 64 | 73 | 76 |
| Rückprallelastizität (%) | 6 | 7 | 41 | 41 |
| Druckverformungsrest nach DIN 53 517 Probeform B 70 h/150°C (%) | 50,0 | 42,4 | 51,8 | 44,2 |

Ergebnis aus Tabelle 3

In jeder Mischung wird die Mooney-Viskosität durch Zusatz von Triallylcitrat abgesenkt und der Vernetzungsgrad beträchtlich erhöht. Man erhält höhere Spannungswerte, höhere Härten und einen verbesserten Druckverformungsrest. Im Beispiel 12 wird die Zugfestigkeit um ca. 30 % verbessert.

Tabelle 4

| Beispiele | 15 | 16 | 17 | 18 |
|---|---|---|---|---|
| Mooney-Viskosität ML 4/100°C | 28 | 66 | - | - |
| Zugfestigkeit (MPa) | 13,6 | 12,6 | - | - |
| Bruchdehnung (%) | 320 | 370 | - | - |
| M 100 % (MPa) | 3,7 | 2,0 | - | - |
| M 200 % (MPa) | 9,7 | 5,7 | - | - |
| Härte (bei 23°C) Shore A | 65 | 60 | 41 | 42 |
| Rückprallelastizität (%) | 36 | 52 | - | - |
| Druckverformungsrest nach DIN 53 517 Probeform B 70 h/125°C (%) | 17 | 24 | - | - |
| Gewichtszunahme in Toluol bei 50°C | - | - | 36,4 | 50,1 |

Ergebnis aus Tabelle 4

Im Vergleich zu den "O"-Mischungen 1 und 5 zeigen die Mischungen bzw. Vulkanisate mit Acetyltriallylcitrat niedrigere Mischungsviskositäten und besseren Vernetzungsgrad (Spannungswerte und Druckverformungswert). Das PE-Vulkanisat zeigt verbesserte Quellwerte.

Patentansprüche

1. Verfahren zur Peroxidvernetzung, dadurch gekennzeichnet, daß als Koagenz und Aktivator Triallylcitrate der Formel (I)

$$\begin{array}{l} \quad\;\; COOCH_2\text{-}CH{=}CH_2 \\ RO\text{-}COOCH_2\text{-}CH{=}CH \\ \quad\;\; COOCH_2\text{-}CH{=}CH_2 \end{array} \qquad (I),$$

in welcher

R für Wasserstoff, einen gesättigten oder ungesättigten aliphatischen Rest, gegebenenfalls substituierten aromatischen Rest, gegebenenfalls substituierten aromatisch-aliphatischen Rest, oder einen Acylrest der Formel (Ia)

$$R^1\text{-}\underset{\underset{O}{\|}}{C}\text{-} \qquad (Ia),$$

in welcher

$R^1$ für einen gesättigten oder ungesättigten aliphatischen Rest oder einen aromatischen rest steht,

eingesetzt werden.

2. Verfahren nach Anspruch 1, dadurch gekennzeichnet, daß 0,1 bis 8 Gew.-Teile Triallylcitrat der Formel (I) eingesetzt werden.